# FASCICULE DE BREVET EUROPEEN

(11) **EP 3 318 019 B1**
(45) Date de publication et mention de la délivrance du brevet: **04.08.2021**
(21) Numéro de dépôt: 16750907.4
(22) Date de dépôt: 30.06.2016
(51) Int. Cl.: H04L 12/28, G08C 17/02

(54) **INSTALLATION DOMOTIQUE ET PROCÉDÉ DE CONSTITUTION DE TOPOLOGIE D'UNE INSTALLATION DOMOTIQUE**
HEIMAUTOMATISIERUNGSSYSTEM UND VERFAHREN ZUR ERZEUGUNG VON TOPOLOGIE EINES HEIMAUTOMATISIERUNGSSYSTEMS
HOME-AUTOMATION SYSTEM AND METHOD FOR CONSTITUTING TOPOLOGY OF A HOME-AUTOMATION SYSTEM

(30) Priorité: 03.07.2015 FR 1556298
(43) Date de publication de la demande: 09.05.2018
(73) Titulaire: SOMFY ACTIVITES SA, 74300 Cluses (FR)
(72) Inventeur: COSSERAT, Hubert, 74100 Annemasse (FR); MICHEL, Florent, 07210 Chomerac (FR)
(74) Mandataire: Verriest, Philippe
(86) Numéro de dépôt international: PCT/FR2016/051637
(87) Numéro de publication internationale: WO 2017/006024

(56) Documents cités:
- US-A1- 2005 044 225
- US-A1- 2006 133 392
- US-A1- 2006 250 578

## Description

La présente invention concerne un procédé de constitution de topologie d'une installation domotique et une installation domotique.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

Dans le cas de bâtiments de grande taille, il peut être nécessaire soit de recourir à des répéteurs, soit de procéder à l'installation de plusieurs unités centrales afin de permettre d'accéder à l'ensemble des dispositifs domotiques faisant partie de l'installation. Par ailleurs, dans le cas d'installations domotiques hétéroclites, dans lesquels de nombreux types de dispositifs domotiques doivent être contrôlés, il peut également être souhaitable d'utiliser plusieurs unités centrales de commandes qui permettent de communiquer dans les différents protocoles de communication utilisés par les dispositifs domotiques.

Si la présence de ces différentes unités permet de communiquer avec l'ensemble des dispositifs, l'architecture ainsi constituée est complexe à maîtriser pour un utilisateur.

Les documents US2006133392, US2005044225 et US2006250578 présentent de telles architectures.

La présente invention a pour but de résoudre tout ou partie des inconvénients mentionnés ci-dessus.

A cet effet, la présente invention concerne un procédé selon la revendication 1, un produit programme d'ordinateur selon la revendication 10, et une installation domotique selon la revendication 11. Les revendications dépendantes définissent des modes de réalisation.

Grâce aux dispositions de l'invention, il est possible d'utiliser plusieurs unités centrales de commandes au sein d'une même installation afin d'étendre le nombre de types de dispositifs domotiques ou le nombre de protocoles domotiques utilisables dans une même installation, ou d'augmenter le nombre de dispositifs total de l'installation, tout en conservant une identification de l'appartenance des différents dispositifs domotiques à une même installation.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné sous la forme d'un appel synchrone ou asynchrone, pouvant également correspondre à un appel de fonction local ou distant.

Par installation, on entend un ensemble comprenant une pluralité de dispositifs domotiques et une pluralité d'unités centrales de commande, qui peuvent être disposés dans un même bâtiment ou dans plusieurs lieux.

Un même dispositif domotique ou une même unité centrale de commande peut appartenir à deux installations différentes sous la responsabilité de deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une seconde installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

Par unité centrale de commande de l'installation domotique, on entend une unité électronique comprenant par exemple au moins une unité de traitement pour contenir et exécuter au moins un programme d'ordinateur, au moins un module de communication destinée au contrôle et/ou à la commande d'au moins un dispositif domotique et au moins un module de communication pour communiquer avec une de gestion. L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

L'unité de gestion peut être un serveur connecté à distance à l'au moins une installation domotique, par l'intermédiaire d'un réseau étendu.

L'unité de gestion peut être une unité centrale destinée à être reliée à une ou plusieurs unités centrales de commande sur des réseaux privés ou locaux distincts, ou encore sur le même réseau local.

L'étape de sélection peut être réalisée par la réception d'une instruction de rattachement de l'utilisateur ou d'un message de commande concernant un rattachement d'au moins un dispositif domotique à au moins une unité centrale de commande.

Selon ces dispositions le rattachement est défini de façon manuelle par l'utilisateur.

L'instruction de rattachement peut correspondre à un ordre ou une action sur un dispositif domotique.

Selon ces dispositions, le rattachement est défini manuellement par l'utilisateur, en effectuant des actions sur un dispositif de commande, comme par exemple un appui sur un bouton dédié, l'envoi d'un message io/RTS avec un point local de commande.

L'instruction de rattachement peut être définie par une instruction communiquée par une interface utilisateur du terminal ou d'une application exécutée sur le terminal utilisateur.

Selon ces dispositions, le rattachement des dispositifs domotiques aux unités centrales de commande peut être opérée par une interface utilisateur d'un terminal utilisateur. L'utilisateur peut sélectionner les dispositifs à rattacher à une unité centrale de commande donnée selon un critère de proximité entre ledit dispositif et l'unité centrale de commande, afin par exemple de limiter lors des émissions la puissance des signaux. Un autre critère peut être la localisation des dispositifs dans une même pièce ou un même étage. L'action spécifique qui doit être exécutée par l'utilisateur permet de réaliser une sélection sans ambiguïté des actionneurs.

L'instruction communiquée par l'interface utilisateur peut correspondre à une sélection dans ladite au moins une liste de dispositifs domotiques.

Selon ces dispositions, la définition du rattachement d'un dispositif domotique à une unité centrale de commande est définie par une sélection par l'utilisateur par l'intermédiaire d'une interface utilisateur. En particulier, chaque unité centrale de commande envoie une liste des dispositifs domotiques avec lesquels elle est susceptible, par exemple les dispositifs dans sa portée de communication radiofréquence dans le cas d'une communication par radiofréquence, et l'utilisateur peut réaliser une sélection dans cette liste pour rattacher un sous-ensemble ou la totalité de la liste à l'unité centrale de commande.

La liste peut être communiquée conjointement avec au moins une information relative à la qualité de la communication entre une unité centrale de commande et le dispositif domotique concerné.

L'information relative à la qualité de la communication peut correspondre par exemple à la puissance du signal reçu par un dispositif en provenance de l'unité centrale, ce qui permet de guider le choix de l'utilisateur.

L'étape de sélection peut être réalisée en fonction d'au moins un critère de sélection prenant en compte une localisation relative, une comparaison de fonction et/ou la qualité de communication entre ledit dispositif domotique et ladite unité centrale de commande.

L'au moins une liste peut être communiquée en association avec au moins une information descriptive relative à la qualité de la communication entre une unité centrale de commande et le dispositif domotique concerné et/ou une information concernant la fonction ou la localisation du dispositif domotique, l'au moins un critère de sélection étant évalué en fonction de l'au moins une information descriptive.

Le critère de sélection peut être évalué par un rapprochement de l'au moins une information descriptive relative à la fonction ou la localisation du dispositif domotique et d'une information de définition de la localisation ou de la fonction de l'unité centrale de commande.

Ainsi, des informations de localisation ou de fonction peuvent être utilisées pour définir le rattachement. A titre d'exemple, une unité centrale de commande peut être définie comme responsable des dispositifs de type « garage », dans ce cas un dispositif de type actionneur de porte de garage sera rattaché à ladite unité centrale de commande.

Le critère de sélection peut être évalué en fonction d'une information descriptive relative à une qualité de communication entre une unité centrale de commande et le dispositif domotique concerné, un dispositif domotique étant rattaché à une unité centrale de commande dont il reçoit une communication avec la meilleure qualité de communication.

La qualité de communication peut être définie par la puissance du signal reçu par l'unité centrale de commande en provenance d'un dispositif. A titre d'exemple, il est possible de prévoir qu'un dispositif est rattaché à une unité centrale de commande qui reçoit ses signaux avec le niveau de réception le plus élevé.

Les unités centrales de commande peuvent ne pas communiquer entre elles, même si elles peuvent être connectées individuellement à une même unité de gestion. Ces dispositions permettent une modularité de l'installation. Ainsi, lors de l'intégration du système, l'ajout/suppression/modification d'une unité centrale de commande ne perturbe pas les autres. De plus, dans le cas de protocoles de communication locaux différents utilisés par les unités centrales de commande, il n'est pas nécessaire de prévoir de passerelle entre lesdits protocoles locaux.

Un premier protocole de communication local peut être identique au deuxième protocole de communication local. Selon un autre aspect, un premier protocole local peut être distinct du deuxième protocole de communication local.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.
La figure 4 est un schéma illustrant un mode de mise en œuvre d'un procédé d'enregistrement d'une unité centrale de commande d'une installation domotique auprès d'une unité de gestion pouvant fonctionner avec l'invention.
La figure 5 est un schéma illustrant un mode de mise en œuvre d'un procédé de constitution de topologie d'une installation domotique selon l'invention.
La figure 6 est un schéma illustrant un autre mode de mise en œuvre d'un procédé de constitution de topologie d'une installation domotique selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

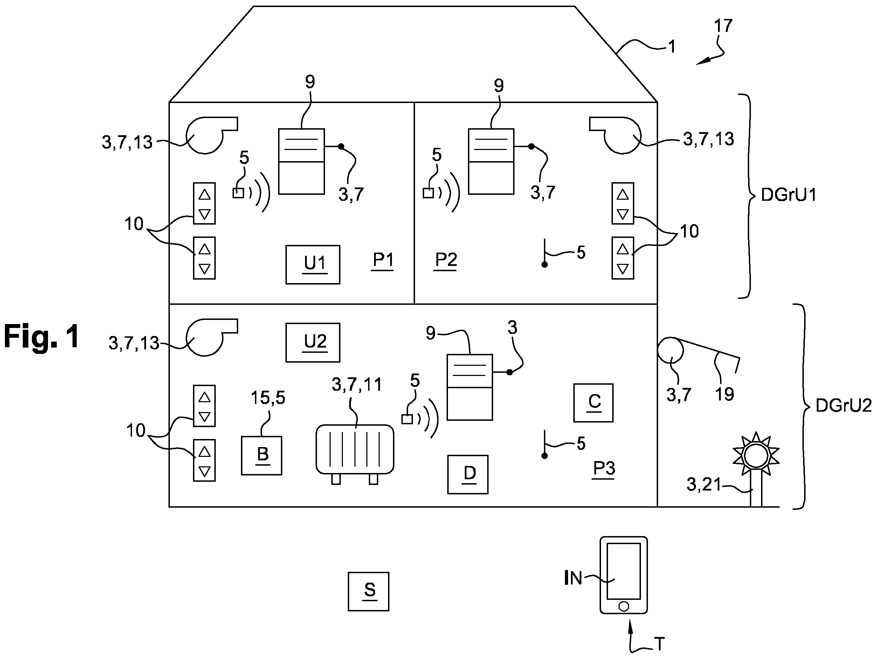

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dis positif D indifféremment pour désigner des capteurs ou des équipements domotiques, ou encore des parties d'équipements domotiques 3 ou de capteurs 5.

L'installation domotique 17 comprend une pluralité d'unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des nœuds ou points d'extrémité dans le réseau local.

Le système d'adressage local peut être hiérarchique ou à plat, le format d'adresse pouvant être numérique ou alphanumérique.

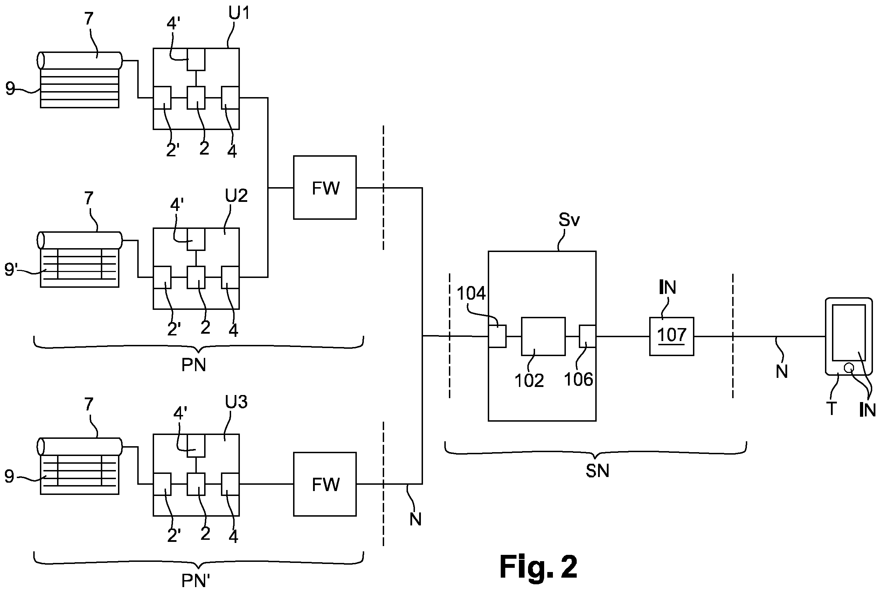

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une seconde installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en œuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth ou Wifi, avec un terminal de communication mobile T. Le terminal de communication T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

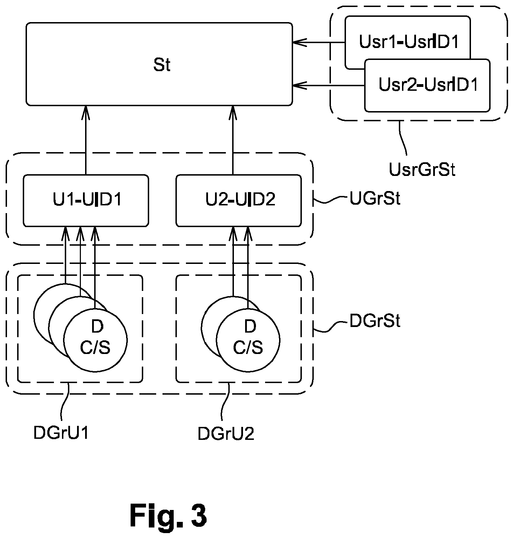

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation, par un identifiant de l'installation ou de l'utilisateur.

Ainsi, pour simplifier la désignation d'une installation dans les APIs publiques, il suffit que les utilisateurs de ces APIs fournissent un identifiant unique attachée à l'entité représentative St de l'installation 17.

De façon interne au serveur, un identifiant unique de l'entité représentative St de l'installation 17 peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique Une entité représentative d'une installation domotique peut être associée avec un utilisateur donné Usr1, identifié par un identifiant UsrID, correspondant par exemple à une combinaison login et mot de passe ou avec un groupe d'utilisateur donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1. knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2. io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

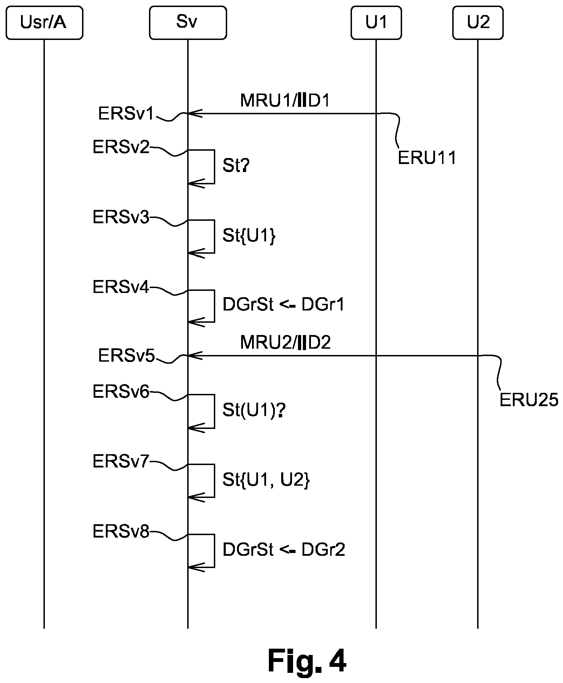

Nous allons à présent décrire un procédé d'enregistrement des unités centrales de commande U, en référence à la figure 4, auprès d'un serveur Sv connecté à l'au moins une installation domotique 17.

Dans une première étape ERSv1, le serveur Sv reçoit au moins un message MRU1 de demande d'enregistrement d'au moins une première unité centrale de commande U1 pour l'installation 17, émise dans une étape ERU1 par une première unité centrale de commande U1, et/ou par un terminal utilisateur T, sur la base d'une information d'identification IID1.

L'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué et/ou directement à un identifiant d'une entité représentative d'une installation. L'information d'identification peut être contenue dans le message ou être déduite du contexte, par exemple d'une adresse réseau d'émission du message, ou encore de caractéristiques relatives à la session de communication.

Dans une seconde étape ERSv2, le serveur obtient une information de rattachement Stl1 de la première unité centrale de commande U1 à une entité représentative St d'une installation domotique 17. Si l'information de rattachement correspond à une absence de rattachement de l'unité centrale de commande U1 à une installation 17 précédemment enregistrée, le serveur procède dans une troisième étape ERSv3 à la création d'une entité représentative de l'installation 17 et rattache la première unité centrale de commande U1 à cette entité représentative St. Cela est notamment le cas lors de l'enregistrement d'une première unité centrale de commande U1 d'une installation donnée.

Dans le cas où une unité centrale de commande U est déjà appairée avec un ou plusieurs dispositifs D d'un groupe DGrU1, l'entité représentative St est mise à jour dans une quatrième étape ERSv4 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative St peuvent être présentes dans le message MRU2, ou faire l'objet d'échanges supplémentaires entre le serveur Sv afin d'obtenir des éléments d'identification des dispositifs D concernés.

Dans une cinquième étape ERSv5, le serveur Sv reçoit au moins un message MRU2 de demande d'enregistrement d'une deuxième unité centrale de commande U2 pour l'installation 17, émis dans une étape ERU1 par une deuxième unité centrale de commande U2, et/ou par un terminal utilisateur T, sur la base d'une information d'identification IID2.

Comme nous l'avons vu précédemment, l'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué, et/ou à un identifiant de l'installation 17.

Dans une sixième étape ERSv6, le serveur Sv procède à l'obtention d'information de rattachement Stl2 de la deuxième unité centrale de commande U2 à une entité représentative St d'une installation domotique 17.

Dans une septième étape ERSv7, le serveur Sv procède à un rattachement de la seconde unité centrale à une entité représentative St de l'installation 17 à laquelle est également rattachée la première unité centrale de commande U1 pour le même utilisateur UID1.

Dans le cas où l'unité centrale de commande U2 est déjà appairée avec un ou plusieurs dispositifs D d'un groupe DGrU2, l'entité représentative St est mise à jour dans une huitième étape ERSv8 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative peuvent être présentes dans le message MRU2, ou faire l'objet d'échanges supplémentaires entre le serveur Sv afin d'obtenir des éléments d'identification des dispositifs D concernés.

Ainsi, les unités centrales de commande U1 et U2 sont considérées comme rattachées à la même entité représentative St d'une installation, qui rassemble l'ensemble des dispositifs D de l'installation rattachés indifféremment à la première ou à la seconde unité centrale de commande dans un même groupe DGrSt qui peut être communiqué à un terminal utilisateur T. Ces dispositions sont obtenues sans communication entre les unités centrales de commande, mais simplement par le rattachement logique opéré lors de l'enregistrement.

L'interface présentée à l'utilisateur peut ainsi ajouter une couche d'abstraction pour cacher le rattachement effectif des dispositifs aux unités centrales de commande U. L'interface représente ainsi les équipements domotiques, comme les volets, stores, HVAC ou éclairage, pilotables dans l'installation ainsi que les capteurs présents.

Si les dispositifs D sont ainsi rattachés à une entité représentative de l'installation, les informations de rattachement des dispositifs domotiques D aux unités centrales de commande U sont toutefois transmises au serveur Sv, pour intégration dans la structure de données, en vue du routage des messages vers l'unité centrale de commande concernée dans le cas de commande par le Serveur Sv. En particulier, l'identifiant de l'unité centrale de commande à laquelle se rattache un produit peut être contenue dans l'identifiant DURL.

Une unité centrale de commande U peut être détachée de l'entité représentative St d'une installation. Lorsqu'une unité centrale de commande U est détachée, tous les dispositifs qui sont gérés par l'intermédiaire de l'unité centrale de commande sont supprimés du groupe DGrSt de dispositifs de l'entité représentative St de l'installation 17. Ainsi, il est possible de prévoir qu'une unité centrale ne peut pas être détachée si l'entité représentative St comprend des dépendances sur les dispositifs D gérés par cette unité centrale de commande U, comme des scénarios. Ces dépendances doivent être supprimées avant que l'unité centrale de commande U puisse être détachée.

Dans le cas de l'appairage d'un nouveau dispositif D à une unité centrale de commande U, ou au contraire de la suppression d'un dispositif, ou encore de sa modification, un message de mise à jour est envoyé au Serveur Sv afin de mettre également à jour la liste de dispositif DGrSt dépendant de l'entité représentative St.

Grâce à ce procédé d'enregistrement, le serveur Sv peut donc proposer sur l'interface IN une description de l'installation 17, grâce à l'utilisation de l'entité représentative sous forme d'un groupe de dispositifs D, contenu dans le groupe de dispositifs DGrSt, qui présentent des variables d'état S mais également des commandes disponibles C.

Il est ainsi possible de commander et de contrôler par l'interface l'ensemble des dispositifs de l'installation indépendamment de leur rattachement aux unités centrales U.

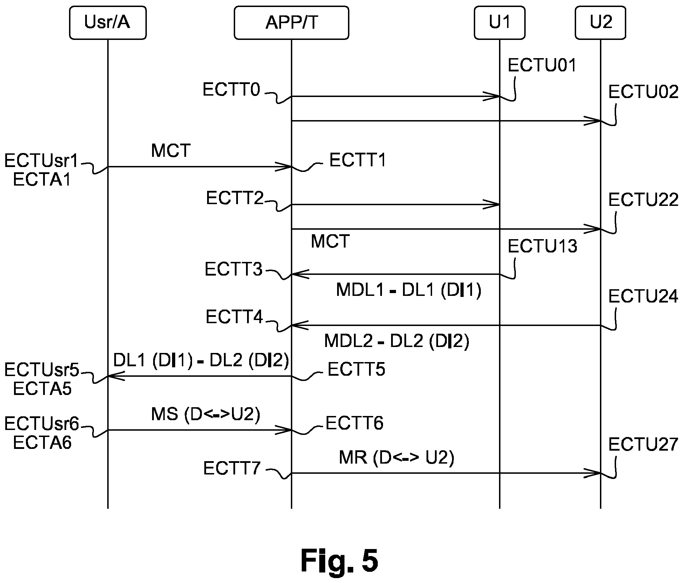

Nous allons à présent décrire un premier mode de mise en œuvre d'un procédé de constitution de topologie d'au moins une installation domotique 17 d'un bâtiment 1 en référence à la figure 5, dans le cas où une sélection est réalisée par un utilisateur, directement ou par une application tierce. Nous supposerons que le procédé de configuration est réalisé postérieurement au procédé d'enregistrement précédemment décrit. Ainsi, les unités centrales de commandes U1 et U2 sont rattachées à l'entité représentative St, et les dispositifs D sont identifiés dans le groupe de dispositif DGrSt rattaché à l'installation. Nous supposerons ici que le procédé est effectué par un terminal utilisateur mobile, par exemple exécutant une application APP.

Ce terminal est connecté dans une étape préalable ECTT0 de façon locale individuellement aux unités centrales de commande U de l'installation 17, en utilisant un protocole local, comme par exemple un protocole de type Bluetooth, ou encore en Wifi. Les unités centrales de commande U1 et U2 acceptent cette connexion respectivement dans des étapes ECTU01 et ECTU02. Nous désignerons par la suite par terminal indifféremment le terminal ou l'application APP exécutée sur ce terminal T.

Dans une étape ECTT1, un message MCT ou une instruction de constitution de la topologie est reçu en provenance par exemple d'un utilisateur ou d'une application tierce qui émet ou communique ce message ou cette instructions respectivement dans une étape ECTUsr1 ou ECTA1. Les étapes ECTT0 et ECTT1 peuvent être interverties, la connexion pouvant être établie après réception des instructions de découverte.

Dans une étape ECTT2, le terminal peut envoyer un message de découverte MCT à la pluralité d'unités centrales U avec lesquelles il est en mesure de communiquer, afin de solliciter des messages en retour. Nous supposerons dans le cas présent que deux unités centrales de commandes U1 et U2 sont présentes dans l'installation et accessibles au terminal T.

Ensuite, dans une première étape de réception ECTT3, le terminal reçoit un premier message MDL1 en provenance d'une première unité de commande U1. Le premier message comprend une liste DL1 comprenant au moins un dispositif domotique D avec lesquelles ladite unité centrale de commande U1 est susceptible de communiquer.

Dans une deuxième étape de réception ECTT4, le terminal reçoit un deuxième message MDL2 en provenance d'une première unité de commande U2. Le deuxième message comprend une deuxième liste DL2 de dispositifs.

Les listes DL1 et DL2 sont communiquées en association avec au moins une information descriptive DI1, DI2 relative à la qualité de la communication entre une unité centrale de commande et le dispositif domotique concerné ou une information concernant la fonction ou la localisation du dispositif domotique.

Nous supposerons ici que la sélection des dispositifs est une opération manuelle. Préalablement à cette étape de sélection, le terminal expose les listes de dispositifs avec lesquels les dispositifs peuvent communiquer à un utilisateur ou à une application tierce A dans une étape ECTT5. L'application tierce A ou l'utilisateur Usr obtienne ces listes dans une étape ECTUsr5, respectivement ECTA5.

Ensuite, une étape de sélection ECTUsr6 ou ECTA6-est réalisée par l'utilisateur ou une application tierce, dans laquelle il est défini une sélection d'une combinaison entre un dispositif D et une unité centrale de commande U dans la liste de laquelle est présent le dispositif D, en en vue du rattachement d'au moins un dispositif D à ladite unité centrale de commande U. L'instruction MS communiquée par l'interface utilisateur et reçue par le Terminal T dans une étape ECTT6 correspond à une sélection dans lesdites listes DL1, DL2 de dispositifs domotiques D indiquant les rattachements devant être effectués.

L'utilisateur peut sélectionner les dispositifs D à rattacher à une unité centrale de commande donnée selon un critère de proximité entre ledit dispositif et l'unité centrale de commande, afin par exemple de limiter lors des émissions la puissance des signaux. Un autre critère peut être la localisation des dispositifs dans une même pièce ou un même étage. L'action spécifique qui doit être exécutée par l'utilisateur permet de réaliser une sélection sans ambiguïté des actionneurs.

Cette décision peut être prise sur la base des informations descriptives DI1, DI2. En particulier, les informations de localisation ou de fonction peuvent correspondre à des parties de logement. A titre d'exemple, une unité centrale de commande peut être définie comme responsable des dispositifs de type « garage », dans ce cas un dispositif de type actionneur de porte de garage sera rattaché à ladite unité centrale de commande. L'information relative à la qualité de la communication peut correspondre par exemple à la puissance du signal reçu par un dispositif D en provenance de l'unité centrale, ce qui permet de guider le choix de l'utilisateur.

A titre d'exemple, nous considérerons ici qu'un dispositif D est présent dans la liste communiquée DL2 par l'unité centrale de commande U2, et que ce dispositif a été sélectionné par l'utilisateur pour un rattachement à l'unité centrale de commande U2.

Dans une étape ECCT7, un envoi d'un message de rattachement MR est réalisé à une unité centrale de commande U sélectionnée à l'étape à l'étape ECTT5 de façon à déclencher un rattachement de l'au moins un dispositif D à ladite unité centrale de commande U. Dans l'exemple représenté à la figure 5, le message MR est envoyé à la l'unité centrale de commande U2 qui le reçoit dans une étape ECTU27.

Bien entendu, les étapes de sélection et d'envoi peuvent être répétées de façon multiple en fonction du nombre de dispositifs à rattacher. Par exemple, un même message MR peut comprendre une liste de dispositifs à rattacher à une unité centrale donnée U.

Selon une variante, l'instruction de rattachement correspond à un ordre ou une action sur un dispositif domotique, par exemple en effectuant des actions sur un dispositif de commande, comme par exemple un appui sur un bouton dédié, l'envoi d'un message io/RTS avec un point local de commande.

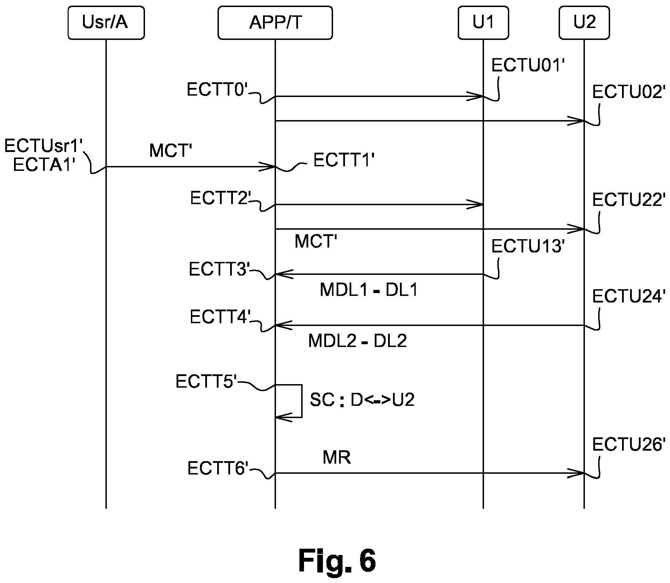

Nous allons à présent décrire un seconde mode de mise en œuvre d'un procédé de constitution de la topologie d'au moins une installation domotique 17 d'un bâtiment 1 en référence à la figure 6, dans le cas où la sélection des dispositifs est automatisée. Nous supposerons comme précédemment que le procédé est effectué par un terminal utilisateur mobile, par exemple exécutant une application APP.

Les étapes ECTT0' à ECTT4' du procédé sont similaires à celles décrites pour le premier mode de mise en œuvre du procédé décrit à la figure 5.

En revanche, les étapes suivantes du procédé diffèrent. Ainsi, à réception des listes DL1, DL2, une opération de sélection automatique des combinaisons entre dispositifs D et unités centrales de commande U est réalisée dans une étape ECTT5'.

L'étape de sélection est réalisée en fonction d'au moins un critère de sélection SC prenant en compte la localisation, la fonction et/ou la qualité de communication entre ledit dispositif domotique et ladite unité centrale de commande U, ce critère étant évalué sur la base des informations descriptives DI1, DI2 contenues dans les listes DL1, DL2.

Selon une première possibilité, le critère de sélection CS peut correspondre à un rapprochement de l'au moins une information descriptive DI relative à la fonction ou la localisation du dispositif domotique et d'une information de définition de la localisation ou de la fonction de l'unité centrale de commande.

A titre d'exemple, une unité centrale de commande peut être définie comme responsable des dispositifs de type « garage », dans ce cas un dispositif de type actionneur de porte de garage sera rattaché à ladite unité centrale de commande.

Selon une autre possibilité, le critère de sélection CS est fonction de qualité de la communication entre une unité centrale de commande et le dispositif domotique concerné. Ainsi, à titre d'exemple, un dispositif domotique peut être rattaché à une unité centrale de commande avec laquelle il établit une communication avec la meilleure qualité de communication. La qualité de la communication peut être par exemple définie par la puissance du signal reçu par l'unité centrale de commande en provenance d'un dispositif. A titre d'exemple, il est possible de prévoir qu'un dispositif est rattaché à une unité centrale de commande qui reçoit ses signaux avec le niveau de réception RSSI le plus élevé.

Bien entendu, le critère de sélection peut prendre en compte différents paramètres précédemment cités ainsi que d'autres paramètres pertinents non décrits.

A titre d'exemple, nous considérerons ici qu'un dispositif D est présent dans la liste communiquée DL2 par l'unité centrale de commande U2, et que ce dispositif a été sélectionné par l'application du critère de sélection CS pour un rattachement à l'unité centrale de commande U2.

Dans une étape ECCT6', un envoi d'un message de rattachement MR est réalisé à une unité centrale de commande U sélectionnée à l'étape à l'étape ECTT5 de façon à déclencher un rattachement de l'au moins un dispositif D à ladite unité centrale de commande U. Dans l'exemple représenté à la figure 5, le message MR est envoyé à la l'unité centrale de commande U2 qui le reçoit dans une étape ECTU26'.

Bien entendu, les étapes de sélection et d'envoi peuvent être répétées de façon multiple en fonction du nombre de dispositifs à rattacher. Par exemple, un même message MR peut comprendre une liste de dispositifs à rattacher à une unité centrale donnée U.

Les unités centrales de commandes peuvent disposer de modules de communication utilisant le même protocole de communication, ou des protocole de communication distincts. Dans ce second cas, la sélection peut être conditionnée ou déterminée entièrement par la possibilité de chaque unité centrale à communiquer avec des dispositifs donnés.

Ainsi, à titre d'exemple, si une unité centrale de commande U1 peut communiquer par un premier protocole de communication P1, par exemple de type Zigbee, et que la seconde unité de commande U2 est apte à communiquer par un second protocole de communication local différent, par exemple de type IO homecontrol, et que l'installation comprend des dispositifs D communiquant par le premier ou le second protocole uniquement, les listes DL1 et DL2 seront exclusives l'une de l'autre et la sélection pourra être effectuée en conservant les listes en l'état.

Une fois la constitution de la topologie réalisée, l'interface utilisateur de l'application APP exécutée sur le terminal est agencée pour regrouper au moins les représentations des dispositifs D contenus dans le premier groupe DGrU1 de dispositif domotiques D comprenant au moins un dispositif domotique D rattaché à la première unité centrale de commande U1 et le deuxième groupe DGrU2 rattaché à la deuxième unité centrale de commande U2 en un groupe de dispositifs DGrSt rattaché à l'installation 17 ou à une entité représentative de l'installation St.

Les procédés d'enregistrement et de constitution de topologie peuvent être réalisés de façon successive ou imbriquées. En particulier il est possible d'enregistrer les unités centrales de commandes une par une, et de rattacher les dispositifs accessibles par son intermédiaire, ce qui simplifie l'étape de sélection. Il est également possible de relancer une procédé de constitution de topologie pour reconfigurer les rattachements de dispositifs aux unités centrales de commande. Il est également possible d'exécuter en premier le procédé de constitution de topologie pour chaque unité centrale de commande , et d'enregistrer ultérieurement dans l'entité représentative St les informations d'identification et de rattachement concernant les unités de commande et dispositifs accessibles par leur intermédiaire.

## Revendications

1. Procédé de constitution de la topologie d'une installation domotique (17) comprenant une première unité centrale de commande (U1) et une deuxième unité centrale de commande (U2), le procédé étant exécuté par un terminal utilisateur (T) connecté à l'installation domotique (17) et comprenant les étapes suivantes :
i. une première étape de réception (ECTT3) en provenance de la première unité centrale de commande (U1) d'au moins un premier message (MDL1) comprenant une première liste (DL1) d'au moins un dispositif domotique (D) avec lequel ladite première unité centrale de commande (U1) est susceptible de communiquer et une deuxième étape de réception (ECTT4) en provenance de la deuxième unité centrale de commande (U2) d'au moins un deuxième message (MDL2) comprenant une deuxième liste (DL2) d'au moins un dispositif domotique (D) avec lequel ladite deuxième unité centrale de commande (U1) est susceptible de communiquer ;
ii. sélection (ECTT6) d'au moins une combinaison d'au moins un dispositif domotique (D) et d'une unité centrale de commande (U) parmi la première et la deuxième unités centrales de commande (U) pour laquelle la liste (DL) communiquée comprend le dispositif domotique sélectionné, la sélection étant telle que dans chaque combinaison sélectionnée, l'au moins un dispositif domotique fait/font partie de la liste provenant de l'unité centrale de commande ;
iii. pour une combinaison sélectionnée, envoi (ECTT7) d'un message de rattachement (MR) à l'unité centrale de commande (U) de la combinaison, le message de rattachement instruisant ladite unité centrale de commande (U) de déclencher un rattachement du dispositif domotique (D) de la combinaison à ladite unité centrale de commande (U)

2. Procédé selon la revendication 1, dans lequel l'étape de sélection est réalisée par une réception d'une instruction de rattachement d'un utilisateur ou une réception d'un message de commande concernant un rattachement d'au moins un dispositif domotique (D) à l'une des première et deuxième unité centrale de commande (U).

3. Procédé selon la revendication 2, dans lequel l'instruction de rattachement correspond à une action sur un dispositif domotique.

4. Procédé selon la revendication 2, dans lequel l'instruction de rattachement est définie par une instruction communiquée par une interface utilisateur (IN) du terminal (T) ou d'une application (APP) exécutée sur le terminal utilisateur (T).

5. Procédé selon la revendication 4, dans lequel l'instruction communiquée par l'interface utilisateur correspond à une sélection dans la première ou la deuxième liste (DL1, DL2).

6. Procédé selon la revendication 1, dans lequel l'étape de sélection est réalisée en fonction d'au moins un critère de sélection (SC) prenant en compte une localisation relative, une comparaison de fonction et/ou une qualité de communication entre ledit dispositif domotique et ladite unité centrale de commande (U).

7. Procédé selon la revendication 6, dans lequel la première et la deuxième liste (DL1, DL2) sont communiquées en association avec au moins une information descriptive (DI) relative à la qualité de la communication entre une unité centrale de commande et le dispositif domotique concerné et/ou une information concernant la fonction ou la localisation du dispositif domotique, l'au moins un critère de sélection (CS) étant évalué en fonction de l'au moins une information descriptive (DI).

8. Procédé selon la revendication 7, dans lequel le critère de sélection (SC) est évalué par un rapprochement de l'au moins une information descriptive (DI) relative à la fonction ou la localisation du dispositif domotique et d'une information de définition de la localisation ou de la fonction de l'unité centrale de commande (U).

9. Procédé selon l'une quelconque des revendications 7 ou 8, dans lequel dans lequel le critère de sélection (SC) est évalué en fonction d'une information descriptive (DI) relative à la qualité de communication entre l'unité centrale de commande et le dispositif domotique concerné, un dispositif domotique (D) et une unité centrale de commande (U) tels qu' une communication reçue par le dispositif domotique de l'unité centrale de commande est avec la meilleure qualité de communication formant une combinaison sélectionnée.

10. Produit programme d'ordinateur comprenant des instructions de code agencées pour mettre en œuvre les étapes d'un procédé selon l'une quelconque des revendications 1 à 9, lorsque ledit programme est exécuté par un processeur d'un terminal utilisateur (T).

11. Installation domotique comprenant au moins une première unité centrale de commande (U1) et une seconde unité centrale de commande (U2), chaque unité centrale de commande comprenant au moins un premier module de communication (2') pour communiquer, selon un premier protocole local (P1) pour la première unité centrale de commande (U1) et selon un deuxième protocole local (P2) pour la deuxième unité centrale de commande (U2), pour un contrôle et/ou une commande de dispositifs domotiques (D), un deuxième module de communication (4) pour communiquer avec une unité de gestion (Sv) par un réseau étendu et un troisième module de communication (4') pour communiquer, selon un troisième protocole local avec un terminal de communication mobile (T), l'installation comprenant en outre un premier groupe (DGrU1) d'au moins un dispositif domotique (D) rattaché à la première unité centrale de commande (U1) et un deuxième groupe (DGrU2) d'au moins un dispositif domotique (D) rattaché à la deuxième unité centrale de commande (U2), l'installation domotique étant configurée pour mettre en œuvre le procédé de constitution de topologie d'une installation domotique selon l'une quelconque des revendications 1 à 9.

12. Installation domotique selon la revendication 11, comprenant un terminal de communication mobile (T) connecté à la première unité centrale de commande (U1), le terminal comprenant une interface utilisateur agencée pour regrouper au moins des représentations de l'au moins un dispositif domotique (D) du premier groupe (DGrU1) et de l'au moins un dispositif domotique (D) du deuxième groupe (DGrU2).

## Patentansprüche

1. Verfahren zum Aufbau der Topologie eines Heimautomatisierungssystems (17), umfassend eine erste zentrale Steuereinheit (U1) und eine zweite zentrale Steuereinheit (U2), wobei das Verfahren durch ein Benutzerendgerät (T) ausgeführt wird, das mit dem Heimautomatisierungssystem (17) verbunden ist, und die folgenden Schritte umfasst:
i. einen ersten Schritt des Empfangens (ECTT3) von mindestens einer ersten Nachricht (MDL1), umfassend eine erste Liste (DL1) von mindestens einer Heimautomatisierungsvorrichtung (D), mit der die erste zentrale Steuereinheit (U1) kommunizieren kann, von der ersten zentralen Steuereinheit (U1) und einen zweiten Schritt des Empfangens (ECTT4) von mindestens einer zweiten Nachricht (MDL2), umfassend eine zweite Liste (DL2) von mindestens einer Heimautomatisierungsvorrichtung (D), mit der die zweite zentrale Steuereinheit (U1) kommunizieren kann, von der zweiten zentralen Steuereinheit (U2);
ii. Auswählen (ECTT6) von mindestens einer Kombination von mindestens einer Heimautomatisierungsvorrichtung (D) und einer zentralen Steuereinheit (U) von der ersten und der zweiten zentralen Steuereinheit (U), für die die kommunizierte Liste (DL) die ausgewählte Heimautomatisierungsvorrichtung umfasst, wobei das Auswählen derart ist, dass die mindestens eine Heimautomatisierungsvorrichtung in jeder ausgewählten Kombination einen Teil der von der zentralen Steuereinheit stammenden Liste bildet/bilden;
iii. für eine ausgewählte Kombination Senden (ECTT7) einer Anschlussnachricht (MR) an die zentrale Steuereinheit (U) der Kombination, wobei die Anschlussnachricht die zentrale Steuereinheit (U) anweist, einen Anschluss der Heimautomatisierungsvorrichtung (D) der Kombination an die zentrale Steuereinheit (U) auszulösen.

2. Verfahren nach Anspruch 1, wobei der Auswahlschritt durch einen Empfang einer Anschlussanweisung von einem Benutzer oder einen Empfang einer Steuernachricht in Bezug auf einen Anschluss von mindestens einer Heimautomatisierungsvorrichtung (D) an eine von der ersten und der zweiten zentralen Steuereinheit (U) durchgeführt wird.

3. Verfahren nach Anspruch 2, wobei die Anschlussanweisung einer Aktion auf eine Heimautomatisierungsvorrichtung entspricht.

4. Verfahren nach Anspruch 2, wobei die Anschlussanweisung durch eine Anweisung definiert wird, die durch eine Benutzeroberfläche (IN) des Endgeräts (T) oder einer Anwendung (APP), die auf dem Benutzerendgerät (T) ausgeführt wird, kommuniziert wird.

5. Verfahren nach Anspruch 4, wobei die Anweisung, die durch die Benutzeroberfläche kommuniziert wird, einer Auswahl in der ersten oder der zweiten Liste (DL1, DL2) entspricht.

6. Verfahren nach Anspruch 1, wobei der Auswahlschritt in Abhängigkeit von mindestens einem Auswahlkriterium (SC) durchgeführt wird, das eine relative Lokalisierung, einen Funktionsvergleich und/oder eine Kommunikationsqualität zwischen der Heimautomatisierungsvorrichtung und der zentralen Steuereinheit (U) berücksichtigt.

7. Verfahren nach Anspruch 6, wobei die erste und die zweite Liste (DL1, DL2) in Verbindung mit mindestens einer beschreibenden Information (DI) in Bezug auf die Kommunikationsqualität zwischen einer zentralen Steuereinheit und der betreffenden Heimautomatisierungsvorrichtung und/oder eine Information bezüglich der Funktion oder der Lokalisierung der Heimautomatisierungsvorrichtung kommuniziert werden, wobei das mindestens eine Auswahlkriterium (CS) in Abhängigkeit von der mindestens einen beschreibenden Information (DI) bewertet wird.

8. Verfahren nach Anspruch 7, wobei das Auswahlkriterium (SC) durch einen Abgleich der mindestens einen beschreibenden Information (DI) in Bezug auf die Funktion oder die Lokalisierung der Heimautomatisierungsvorrichtung und einer Definitionsinformation zu der Lokalisierung oder der Funktion der zentralen Steuereinheit (U) bewertet wird.

9. Verfahren nach einem der Ansprüche 7 oder 8, wobei das Auswahlkriterium (SC) in Abhängigkeit von einer beschreibenden Information (DI) in Bezug auf die Kommunikationsqualität zwischen der zentralen Steuereinheit und der betreffenden Heimautomatisierungsvorrichtung bewertet wird, wobei eine Heimautomatisierungseinheit (D) und eine zentrale Steuereinheit (U), bei denen eine Kommunikation, die durch die Heimautomatisierungsvorrichtung von der zentralen Steuereinheit empfangen wird, die beste Kommunikationsqualität aufweist, eine ausgewählte Kombination bilden.

10. Computerprogrammprodukt, umfassend Codeanweisungen, die zum Umsetzen der Schritte eines Verfahrens nach einem der Ansprüche 1 bis 9 eingerichtet sind, wenn das Programm durch einen Prozessor eines Benutzerendgeräts (T) ausgeführt wird.

11. Heimautomatisierungssystem, umfassend mindestens eine erste zentrale Steuereinheit (U1) und eine zweite zentrale Steuereinheit (U2), wobei jede zentrale Steuereinheit mindestens ein erstes Kommunikationsmodul (2') zum Kommunizieren gemäß einem ersten lokalen Protokoll (P1) für die erste zentrale Steuereinheit (U1) und gemäß einem zweiten lokalen Protokoll (P2) für die zweite zentrale Steuereinheit (U2) für eine Kontrolle und/oder eine Steuerung von Heimautomatisierungsvorrichtungen (D), ein zweites Kommunikationsmodul (4) zum Kommunizieren mit einer Verwaltungseinheit (Sv) durch ein ausgedehntes Netzwerk und ein drittes Kommunikationsmodul (4') zum Kommunizieren gemäß einem dritten lokalen Protokoll mit einem Mobilkommunikationsendgerät (T) umfasst, wobei das System weiterhin eine erste Gruppe (DGrU1) von mindestens einer Heimautomatisierungsvorrichtung (D), die an die erste zentrale Steuereinheit (U1) angeschlossen ist, und eine zweite Gruppe (DGrU2) von mindestens einer Heimautomatisierungsvorrichtung (D), die an die zweite zentrale Steuereinheit (U2) angeschlossen ist, umfasst, wobei die Heimautomatisierungsvorrichtung zum Umsetzen des Verfahrens zum Aufbau der Topologie eines Heimautomatisierungssystems nach einem der Ansprüche 1 bis 9 konfiguriert ist.

12. Heimautomatisierungssystem nach Anspruch 11, umfassend ein Mobilkommunikationsendgerät (T), das mit der ersten zentralen Steuereinheit (U1) verbunden ist, wobei das Endgerät eine Benutzeroberfläche umfasst, die zum Umgruppieren von mindestens Darstellungen der mindestens einen Heimautomatisierungsvorrichtung (D) der ersten Gruppe (DGrU1) und der mindestens einen Heimautomatisierungsvorrichtung (D) der zweiten Gruppe (DGrU2) eingerichtet ist.

## Claims

1. A method for constituting the topology of a home automation installation (17) comprising a first central control unit (U1) and a second central control unit (U2), the method being executed by a user terminal (T) connected to the home automation installation (17) and comprising the following steps:
i. a first reception step (ECTT3) coming from the first central control unit (U1) of at least a first message (MDL1) comprising a first list (DL1) of at least one home automation device (D) with which said first central control unit (U1) is capable of communicating and a second reception step (ECTT4) coming from the second central control unit (U2) of at least one second message (MDL2) comprising a second list (DL2) of at least one home automation device (D) with which said second central control unit (U1) is able to communicate;
ii. a selection (ECTT6) of at least one combination of at least one home automation device (D) and one central control unit (U) among the first and the second central control units (U) for which the communicated list (DL) comprises the selected home automation device, the selection being such that in each selected combination, the at least one home automation device is/are part of the list coming from the central control unit;
iii. for a selected combination, sending (ECTT7) an attachment message (MR) to the central control unit (U) of the combination, the attachment message instructing said central control unit (U) to trigger an attachment of the home automation device (D) of the combination to said central control unit (U)

2. The method according to claim 1, wherein the selection step is carried out by receiving an attachment instruction from a user or receiving a control message concerning an attachment of at least one home automation device (D) to one of the first and second central control units (U).

3. The method according to claim 2, wherein the attachment instruction corresponds to an action on a home automation device.

4. The method according to claim 2, wherein the attachment instruction is defined by an instruction communicated by a user interface (IN) of the terminal (T) or an application (APP) executed on the user terminal (T).

5. The method according to claim 4, wherein the instruction communicated by the user interface corresponds to a selection in the first or second list (DL1, DL2).

6. The method according to claim 1, wherein the selection step is performed as a function of at least one selection criterion (SC) taking into account a relative location, a function comparison and/or a communication quality between said home automation device and said central control unit (U).

7. The method according to claim 6, wherein the first and second list (DL1, DL2) are communicated in association with at least one descriptive information (DI) relating to the quality of the communication between a central control unit and the concerned home automation device and/or an information relating to the function or location of the home automation device, the at least one selection criterion (CS) being evaluated as a function of the at least one descriptive information (DI).

8. The method according to claim 7, wherein the selection criterion (SC) is evaluated by a reconciliation of at least one descriptive information (DI) relating to the function or location of the home automation device and a definition information of the location or function of the central control unit (U).

9. The method according to any one of claims 7 or 8, wherein the selection criterion (SC) is evaluated as a function of a descriptive information (DI) relating to the quality of communication between the central control unit and the concerned home automation device, a home automation device (D) and a central control unit (U) such as a communication received by the home automation device of the central control unit with the best quality of communication forming a selected combination.

10. A computer program product comprising code instructions arranged to implement the steps of a method according to any one of claims 1 to 9, when said program is executed by a processor of a user terminal (T).

11. A home automation installation comprising at least one first central control unit (U1) and one second central control unit (U2), each central control unit comprising at least one first communication module (2') to communicate, according to a first local protocol (P1) for the first central control unit (U1) and according to a second local protocol (P2) for the second central control unit (U2), for a monitoring and/or control of a home automation devices (D), a second communication module (4) to communicate with a management unit (Sv) via a wide area network and a third communication module (4') to communicate, according to a third local protocol with a mobile communication terminal (T), the installation further comprising a first group (DGrU1) of at least one home automation device (D) attached to the first central control unit (U1) and a second group (DGrU2) of at least one home automation device (D) attached to the second central control unit (U2), the home automation installation being configured to implement the method for constituting the topology of a home automation installation according to any one of claims 1 to 9.

12. The home automation installation according to claim 11, comprising a mobile communication terminal (T) connected to the first central control unit (U1), the terminal comprising a user interface arranged to group together at least representations of the at least one home automation device (D) of the first group (DGrU1) and of the at least one home automation device (D) of the second group (DGrU2).
